# EUROPÄISCHE PATENTSCHRIFT

(11) **EP 1 736 337 B1**
(45) Veröffentlichungstag und Bekanntmachung des Hinweises auf die Patenterteilung: **22.05.2013**
(21) Anmeldenummer: 06012463.3
(22) Anmeldetag: 17.06.2006
(51) Int. Cl.: B60J 7/12

(54) **Cabriolet-Fahrzeug mit zumindest einem bei der Dachöffnung einwärts verlagerbaren seitlichen Rahmenteil**
Convertible vehicle with at least one side frame component which is moveable inwards when the vehicle roof is opened
Cabriolet avec au moins un composant de cadre latéral deplaçable vers l'intérieur pendant l'ouverture du toit.

(30) Priorität: 22.06.2005 DE 102005028801
(43) Veröffentlichungstag der Anmeldung: 27.12.2006
(73) Patentinhaber: Valmet Automotive Oy, 23500 Uusikaupunki (FI)
(72) Erfinder: Theuerkauf, Jürgen, 49560 Bramsche (DE)
(74) Vertreter: Kronthaler, Schmidt & Coll.

(56) Entgegenhaltungen:
- EP-A- 1 285 801
- DE-C- 943 747
- US-A- 2 860 913
- US-A- 3 146 022
- US-A- 3 159 422

## Beschreibung

Die Erfindung betrifft ein Cabriolet-Fahrzeug mit einem seitliche Rahmenteile umfassenden Dach, wobei zumindest ein Rahmenteil derart beweglich an die Karosserie angebunden ist, daß er mit seinem der Anbindung abgewandten Ende bei Öffnen des Daches in Richtung einer vertikalen Fahrzeuglängsmittelebene einwärts verlagerbar ist, nach dem Oberbegriff des Anspruchs 1. Das Dokument US 3 159 422 A offenbart ein solches Cabriolet-Fahrzeug.

Die DE 943 747 zeigt ein Dach mit in geschlossener Stellung zwei hintereinander folgenden seitlichen Rahmenteilen, von denen der hintere beweglich an die Fahrzeugkarosserie angebunden ist. Zur Anbindung ist ein Getriebe mit zwei senkrecht zueinander stehenden Schwenkachsen vorgesehen. Die erste Schwenkachse liegt horizontal und quer zum Fahrzeug. Bei der Dachöffnung über eine Heckwärtsdrehung um diese Achse läuft ein äußeres, den hinteren Rahmenteil steuerndes Element auf einem Kegelrad um diese Achse, so daß das Rahmenteil senkrecht zu dieser um eine zweite Achse verschwenkt wird und dabei das diesem Getriebe abgewandte Ende des hinteren seitlichen Rahmenteils um diese Achse mit einwärts in Richtung einer vertikalen Längsmittelebene schwenkt. Dieses wiederum ist an dem abgewandten Ende mit einem vorderen Rahmenteil gelenkig verbunden, wobei die Achse dieses Gelenks parallel zur zweiten Achse des hinteren Getriebes und parallel zur Achse eines vorderen Gelenks stehen muß, mit dem der vordere seitliche Rahmenteil an eine die Rahmenteile quer verbindende Dachspitze angebunden ist. Dies schränkt die Kinematik der Dachöffnungsbewegung ein. Zudem ist das hintere Zweiachsgetriebe für den hinteren seitlichen Rahmenteil für eine verkantungsfreie Bewegung massiv auszuführen und erfordert einen erheblichen Bauraum in der Karosserie, der häufig nicht zur Verfügung steht. Das Zweiachsgetriebe muß dabei weit außen unterhalb der vertikalen Ebene der äußeren Dacherstreckung liegen. Alle Achsen müssen während der gesamten Bewegung parallel zu dieser vertikalen Ebene bleiben.

Aus der US 3,159,422 A ist ein Fahrzeug mit einem zwei in geschlossener Position des Verdecks hintereinander angeordneten seitlichen Rahmenelementen aufweisenden Verdeck bekannt, welche bei einer Überführung des Verdecks von der geschlossenen Position in die offene Position gegeneinander um ein Achse gegeneinander einschwenken. Das hintere seitliche Rahmenelement ist über eine Achse karosseriefest gelagert, wobei die Achse in einer horizontalen Ebene angeordnet und in Fahrtrichtung vorwärts und einwärts gegenüber einer Karosserie geneigt ist. Eine fahrzeugfrontseitig mit dem vorderen seitlichen Rahmenelement schwenkbar verbundene und in Fahrzeugquerrichtung verlaufende Dachspitze wird bei einer Überführung des Verdecks zwischen der geschlossenen Position und der offenen Position derart verschwenkt, dass die Dachspitze in offener Position des Verdecks mit einer Seite nach oben zeigt, welche in geschlossener Position des Verdecks in Richtung eines Fahrgastraumes zeigt.

Der Erfindung liegt das Problem zugrunde, diese Nachteile zu vermeiden und eine sehr raumsparende Dachablage zu ermöglichen.

Die Erfindung löst dieses Problem durch ein Cabrioletfahrzeug mit den Merkmalen des Anspruchs 1. Hinsichtlich vorteilhafter Ausgestaltungen und Weiterbildungen der Erfindung wird auf die weiteren Ansprüche 2 bis 7 verwiesen.

Dadurch, dass der vordere Querträger gegenüber seiner geschlossenen Stellung ungewendet ablegbar ist, kann eine sehr raumsparende Ablage der Dachspitze stattfinden, wobei weitere Rahmenteile in der Wölbung der Dachspitze ohne nennenswerte Höhenerweiterung des abgelegten Dachpakets aufgenommen sein können.

Mit der Ausbildung nach Anspruch 1 ist erreicht, daß auch bei einem Cabriolet-Fahrzeug, bei dem ein hinterer Rahmenteil beweglich an die Karosserie angebunden ist und mit seinem der Anbindung abgewandten Ende bei Öffnen des Daches heckwärts und in Richtung einer vertikalen Fahrzeuglängsmittelebene einwärts verlagerbar ist, die Bewegung vereinfacht ist und für beide Schwenkrichtungen des hinteren Rahmenteils ein einfaches und raumsparendes Getriebe mit nur einer Schwenkachse eingesetzt werden kann. Dadurch, daß diese schräg im Raum und angewinkelt zu einer vertikalen Längsebene steht, sind die Heckwärts- und die Einwärtsschwenkbewegung durch eine einzige Bewegung um diese Achse zu realisieren. Die Achse kann je nach räumlichen Verhältnissen im Rohbau mehr oder weniger angewinkelt und in angepaßter Orientierung stehen.

Wenn vorteilhaft die Schwenkachse sich mit einer Komponente in Fahrtrichtung nach vorne und in Richtung einer vertikalen Längsmittelebene einwärts erstreckt, kann das die Achse umfassende Gelenk gegenüber der vertikalen Ebene der äußeren seitlichen Dacherstreckung einwärts versetzt sein und muß nicht direkt unter dieser liegen. Somit kann das Gelenk beispielsweise zwischen hinteren Radkästen angeordnet sein. Auch kann bei dem gleichzeitigen Einwärts- und ein Heckwärtsschwenkeh des hinteren Rahmenteils das Dach auch beispielsweise unter einen nach innen überkragenden Rand einer seitlichen Verkleidung verlagert werden.

Mit der Anbindung eines weiteren Rahmenteils an dem hinteren Rahmenteil über ein Gelenk, dessen Achse schräg zur Schwenkachse der Anbindung des hinteren Rahmenteils an der Karosserie steht, kann der weitere Rahmenteil bei der Dachöffnung gegenüber dem hinteren Rahmenteil auswärts schwenken und somit beispielsweise in abgelegter Stellung des Daches in Draufsicht von seiner Anbindung an dem jeweiligen hinteren Dachteil zumindest nahezu horizontal nach außen zeigen oder je nach Fahrzeuggeometrie sogar von seiner Anbindung an dem hinteren Dachteil eine geringfügig heckwärts weisende Komponente aufweisen. Dadurch wird eine sehr flache Dachablage möglich, bei der die seitlichen Rahmenteile nicht übereinander liegen müssen, sondern voreinander liegen können.

Es ist dabei nicht zwingend, daß die Achse der Anbindung des weiteren Rahmenteils an dem hinteren Rahmenteil und die Schwenkachse der Anbindung des hinteren Rahmenteils an der Karosserie sich schneiden, sondern sie können auch windschief zueinander stehen. Dies ermöglicht eine hohe Flexibilität bei der Anpassung des Daches an ein jeweiliges Fahrzeug.

Eine zusätzliche Ausgleichsachse neben einer eigentlichen Bewegungsachse an der Anbindung einer Dachspitze mit einem vorderen Querträger an die weiteren Rahmenteile ermöglicht einen verkantungsfreien und flüssigen Bewegungsablauf.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:

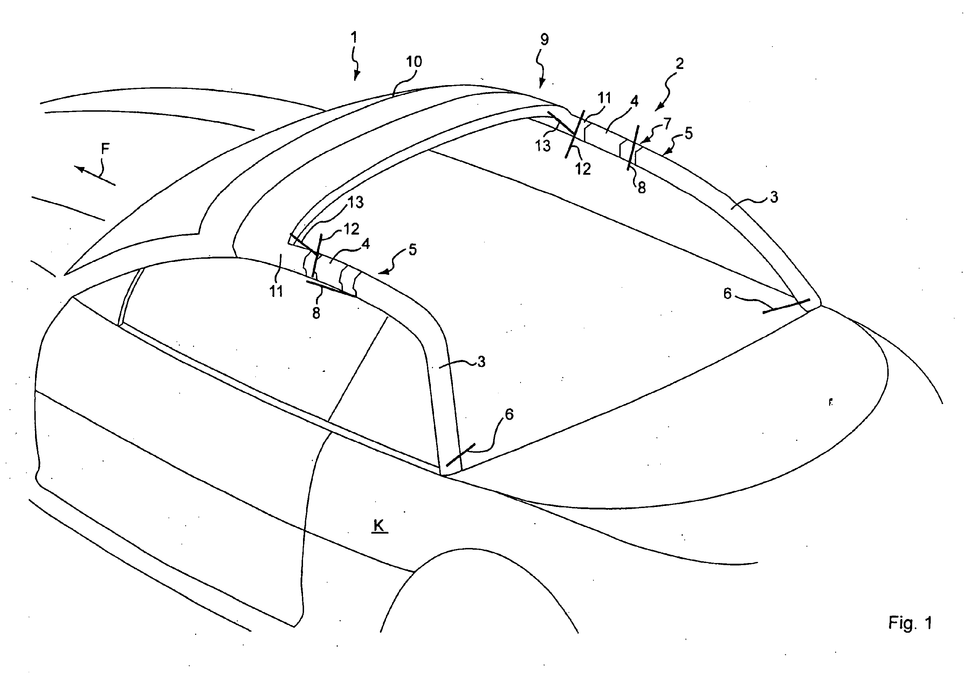

- Fig. 1: eine schematische, vorne und hinten abgebrochene perspektivische Ansicht von schräg hinten eines erfindungsgemäßen Cabriolet-Fahrzeugs bei geschlossenem Dach, wobei der Übersichtlichkeit halber ein Dachbezug nicht eingezeichnet wurde,

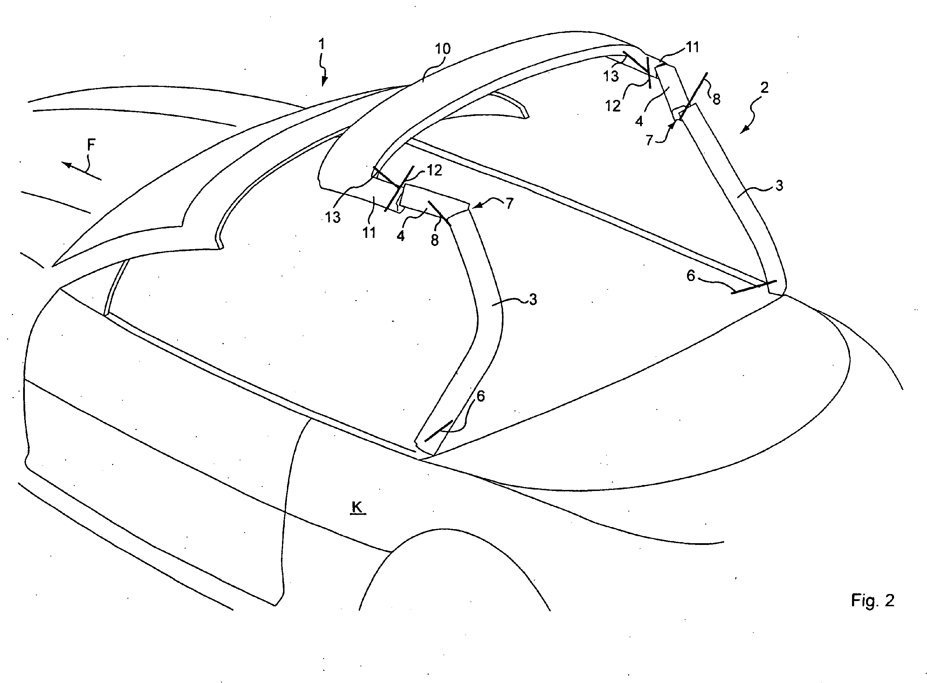

- Fig. 2: eine ähnliche Ansicht wie Fig. 1 während der beginnenden Dachöffnung mit gleichzeitigem Heckwärts- und Einwärtsschwenken der hinteren seitlichen Rahmenteile und gleichbleibender Orientierung der Dachspitze,

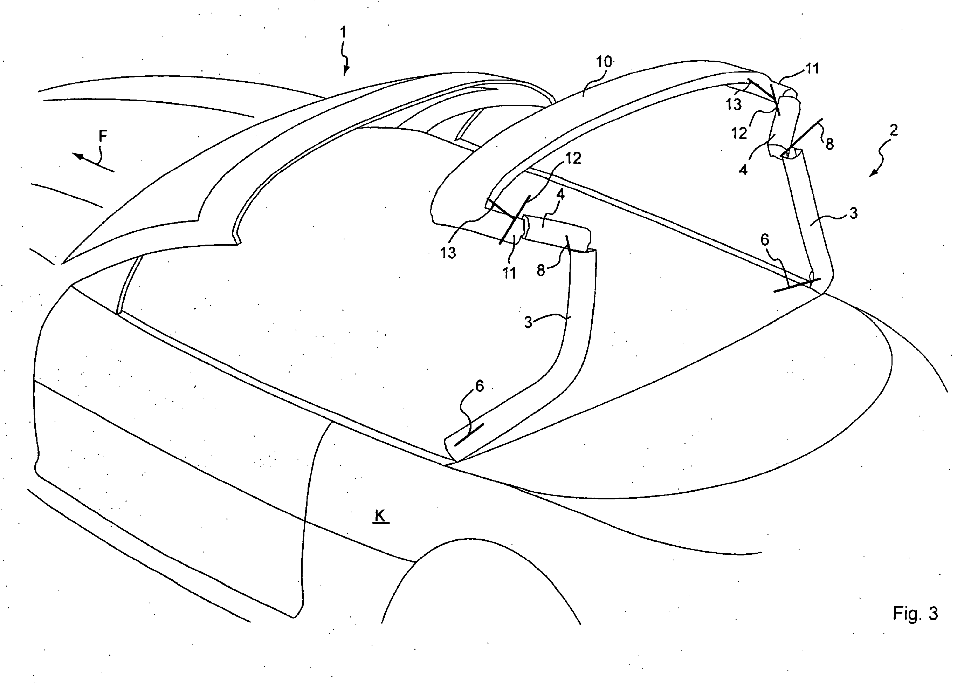

- Fig. 3: eine ähnliche Ansicht wie Fig. 2 während der weiter fortschreitenden Dachöffnung,

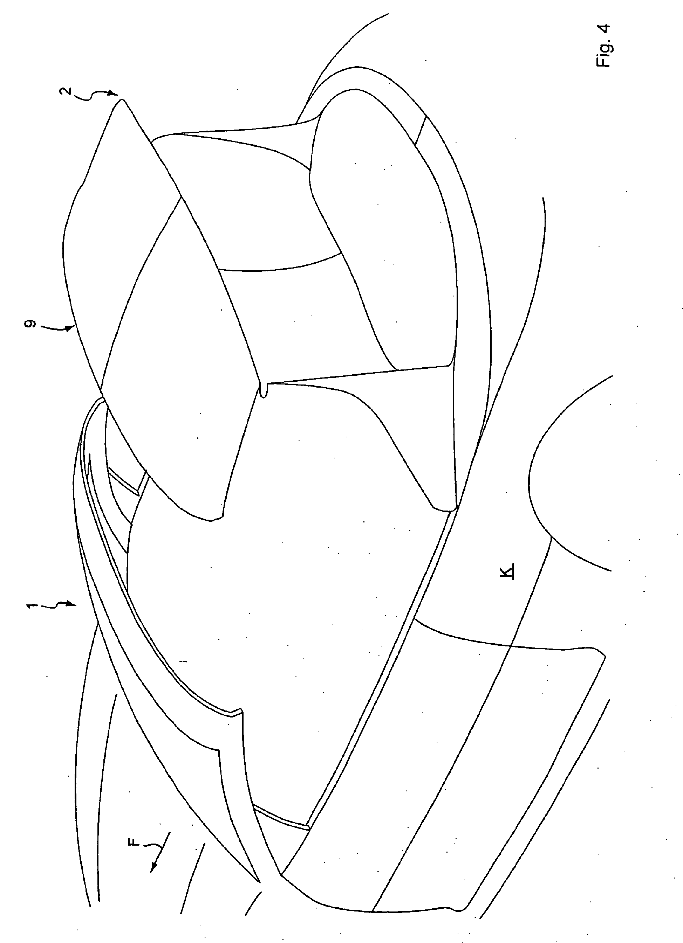

- Fig. 4: eine ähnliche Ansicht wie Fig. 3 mit zusätzlich angedeutetem Dachbezug,

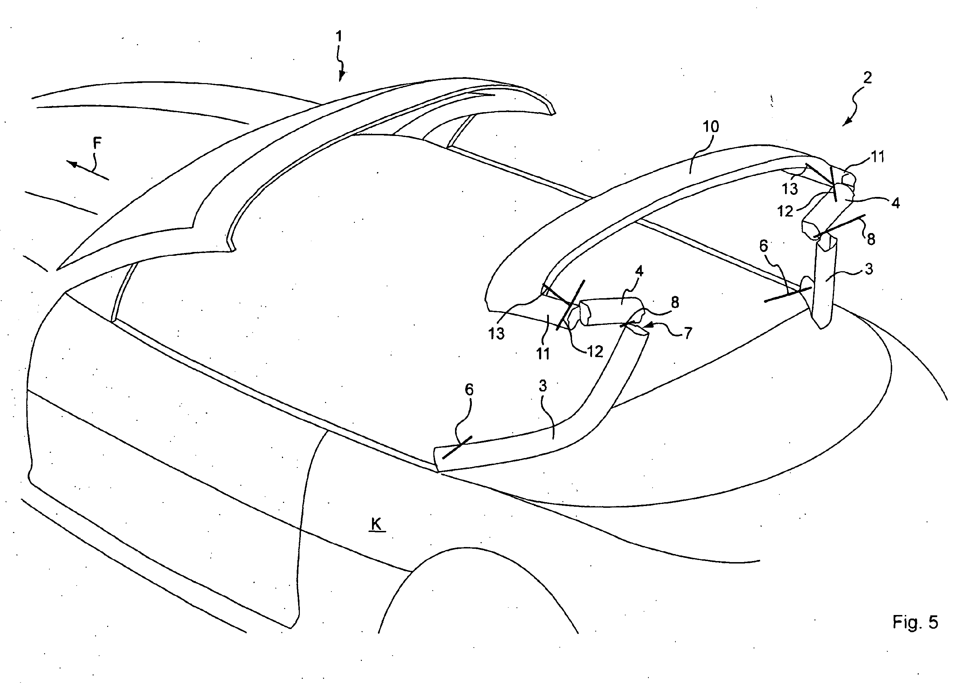

- Fig. 5: eine ähnliche Ansicht wie Fig. 3 bei weit fortgeschrittener Dachöffnung,

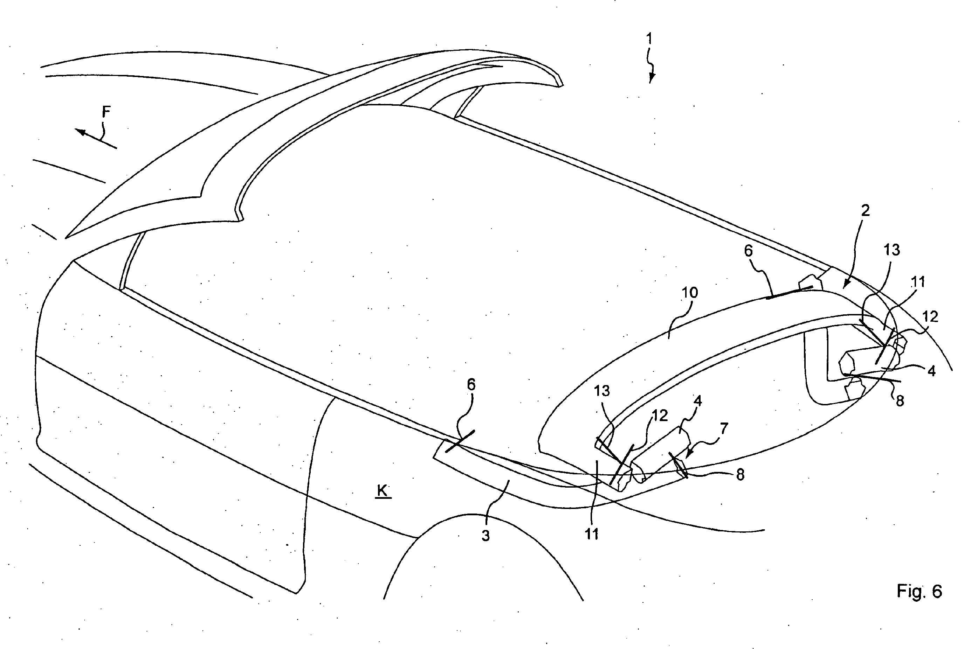

- Fig. 6: eine ähnliche Ansicht wie Fig. 5 bei vollständiger Dachöffnung,

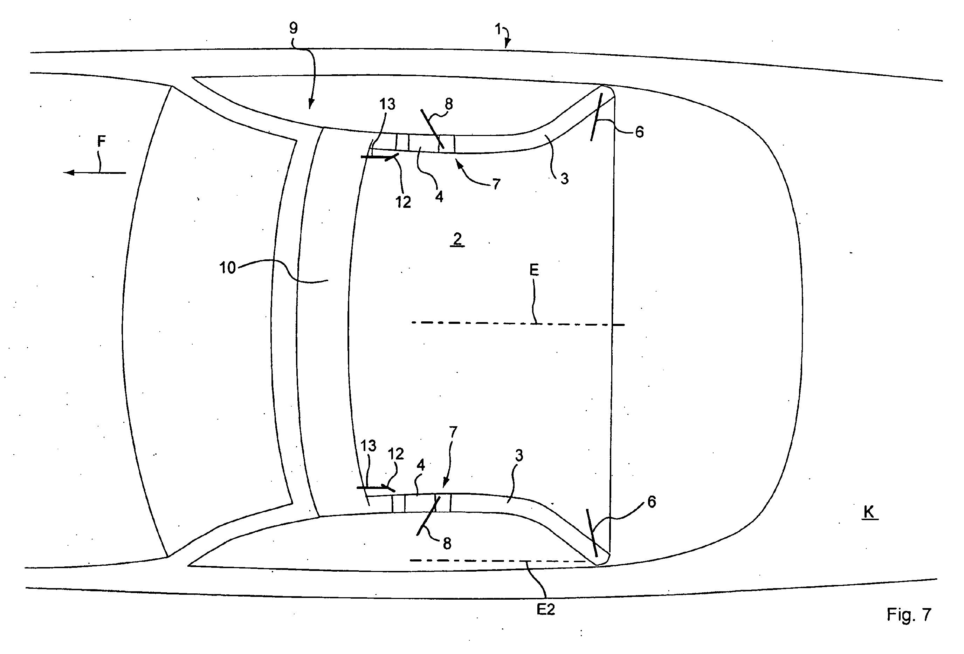

- Fig. 7: eine Ansicht von oben auf das Fahrzeug in Dachstellung nach Fig. 1,

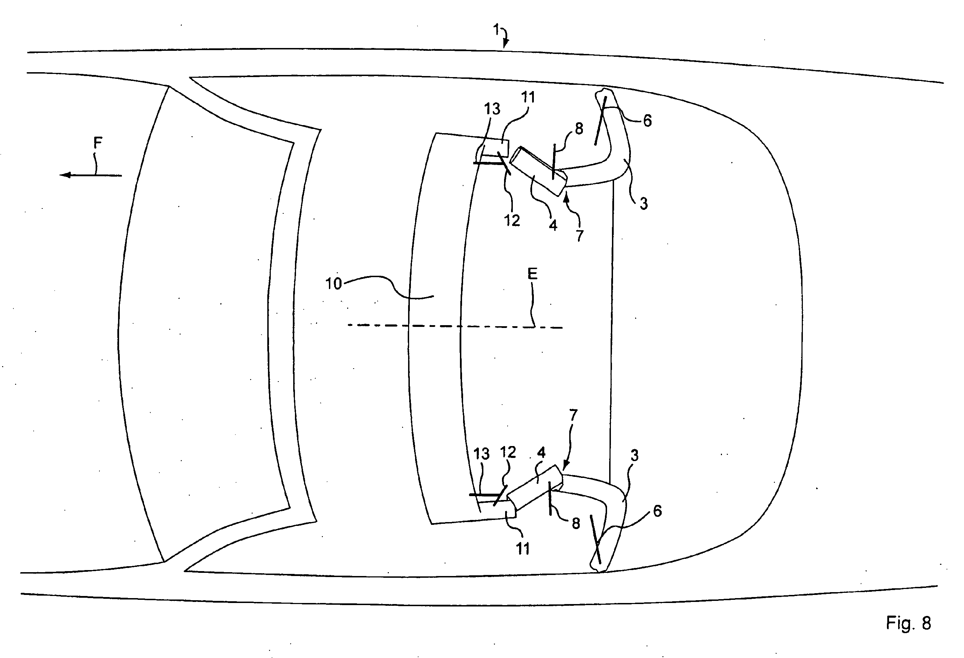

- Fig. 8: eine ähnliche Ansicht wie Fig. 7 auf das Fahrzeug ungefähr in Dachstellung nach Fig. 2,

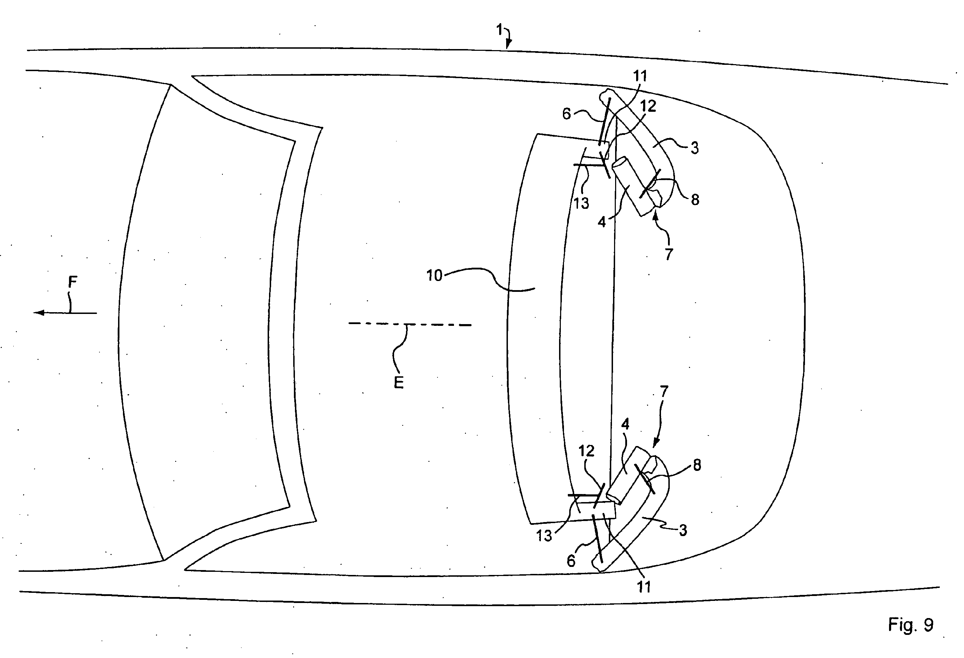

- Fig. 9: eine ähnliche Ansicht wie Fig. 8 auf das Fahrzeug ungefähr in Dachstellung nach Fig. 4,
- Fig. 10: eine ähnliche Ansicht wie Fig. 9 auf das Fahrzeug bei vollständig geöffnetem Dach nach Fig. 5,

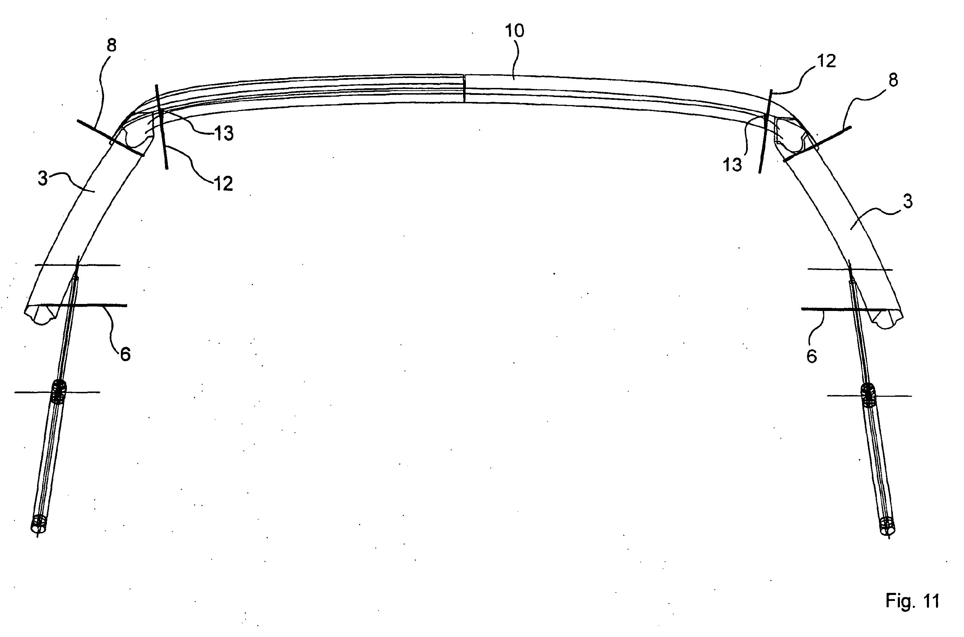

- Fig. 11: eine Ansicht von hinten auf das geschlossene Dach nach Fig. 1,
- Fig. 12: eine Ansicht von hinten auf das vollständig geöffnete Dach nach Fig. 6,

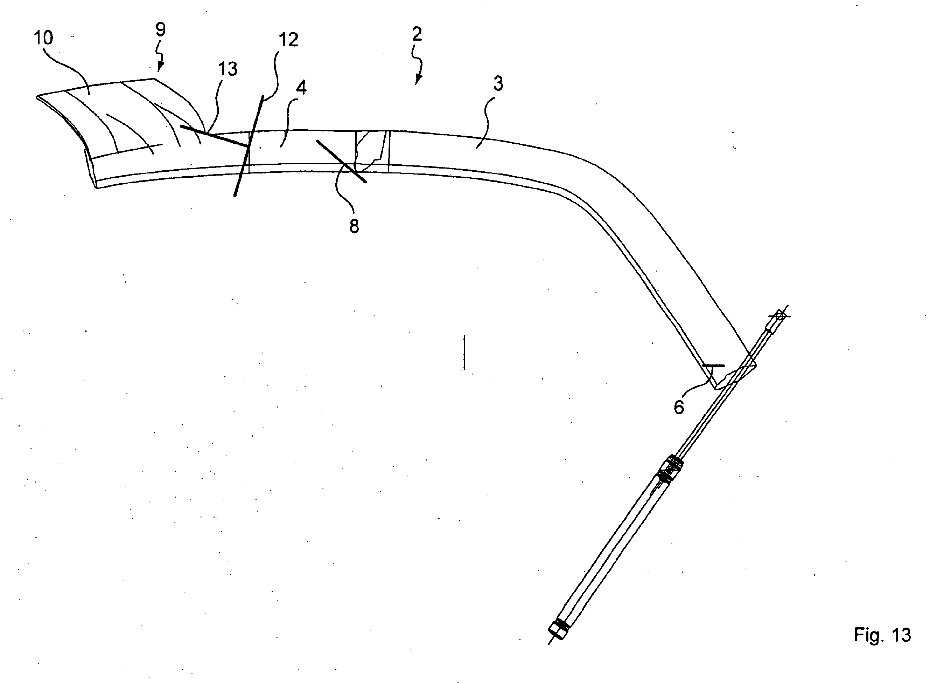

- Fig. 13: eine Ansicht von der Seite auf das geschlossene Dach nach Fig. 1.

Das in der Zeichnung dargestellte Cabriolet-Fahrzeug 1 kann entweder - wie hier - ein Zweisitzer mit einer Sitzreihe sein oder auch mit zumindest einer hinteren Sitzreihe versehen und als vier- oder mehrsitziges Fahrzeug ausgebildet sein.

Das bewegliche Dach 2 kann manuell, voll- oder teilautomatisch zu öffnen und zu schließen sein und umfaßt zumindest zwei im geschlossenen Zustand bezüglich der Fahrtrichtung hintereinander folgende und im Querrandbereich des Daches 2 liegende seitliche Rahmenteile 3, 4, die jeweils in sich lang erstreckt sind. Ein hinterer Rahmenteil 3 ist beweglich an die Karosserie K angebunden und mit seinem der Anbindung abgewandten Ende 5 bei Öffnen des Daches 2 heckwärts und in Richtung einer vertikalen Fahrzeuglängsmittelebene E einwärts verlagerbar. Dabei ist ein an diesen in Fahrtrichtung F anschließender weiterer Rahmenteil 4 mit seinem hinteren Endbereich ebenfalls mit einer Komponente in Richtung der Ebene E einwärts bewegbar. die Rahmenteile 3, 4 sind beispielhaft als Strangpreßprofile mit längs angeordneten Dichtungen für die Abdichtung gegenüber seitlichen Fenstern ausgebildet. Sie können für unterschiedliche Dachausbildungen eingesetzt sein und beispielsweise einen flexiblen Bezug seitlich spannen. Auch können sie starre Dachteile seitlich begrenzen und zum Beispiel gegenüber diesen einschwenkbar sein.

Bei der Dachöffnung ist der hintere Rahmenteil 3 um eine zu einer vertikalen und in Fahrzeuglängsrichtung erstreckten Ebene E2 schräg stehende und diese schneidende Schwenkachse 6 gegenüber der Karosserie K schwenkbeweglich. Dadurch treten gleichzeitig eine Einwärts- und Heckwärtsverlagerung des der Schwenkachse 6 abgewandten Endes 5 auf.

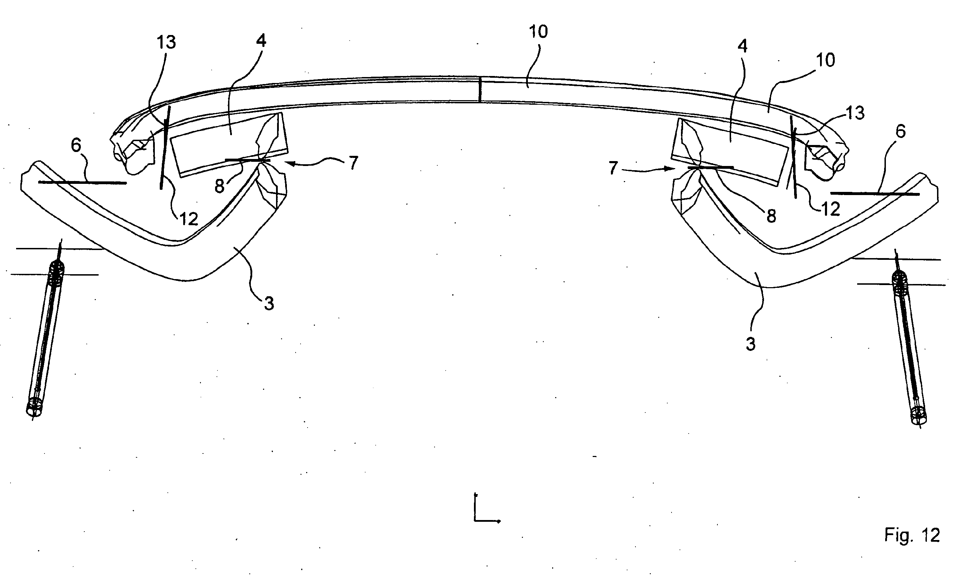

Die Schwenkachse 6 steht dabei derart schräg im Raum, daß sie sich zumindest mit einer Komponente,in Fahrtrichtung F nach vorne und mit einer Komponente in Richtung der vertikalen Längsmittelebene E einwärts erstreckt. Sie weist daher gegenüber einer quer zum Fahrzeug erstreckten Horizontallinie H in Fahrtrichtung einen Winkel α und zur Fahrtrichtung F einen Winkel β auf. Im gezeichneten Ausführungsbeispiel liegt die Achse 6 horizontal (Fig. 12); sie könnte jedoch auch mit einer Vertikalkomponente derart schräg stehen, daß ein Schwenken um diese Achse 6 auch eine Abwärtskomponente für den Rahmenteil 3 enthalten würde, so daß das Dach 2 in eine tiefer gelegene Öffnungsposition gelangen würde.

An seinem der Anbindung abgewandten Ende 5 ist der hintere Rahmenteil 3 über ein Gelenk 7 mit einem bei geschlossenem Dach in Fahrtrichtung fluchtend anschließenden weiteren Rahmenteil 4 verbunden. Die Achse 8 dieses Gelenks 7 kann schräg zur Schwenkachse 6 der Anbindung des hinteren Rahmenteils 3 an der Karosserie K stehen und eine erhebliche vertikale Komponente aufweisen, wobei sich die Achsen 8, 6 zwar schneiden können, um ein sphärisches Getriebe auszubilden; sie können jedoch auch windschief zueinander stehen.

Zudem kann der weitere Rahmenteil erheblich kürzer sein als der hintere Rahmenteil, wobei ohne eine geforderte Parallelität der Schwenkachsen 6 und 8 der Einwärtsschwenkwinkel β des hinteren Rahmenteils 3 und der Auswärtsschwenkwinkel γ des weiteren Rahmenteils 4 am Gelenk 7 (jeweils gegenüber einer zur vertikalen Fahrzeuglängsmittelebene E parallelen Ebene) erheblich voneinander abweichen können.

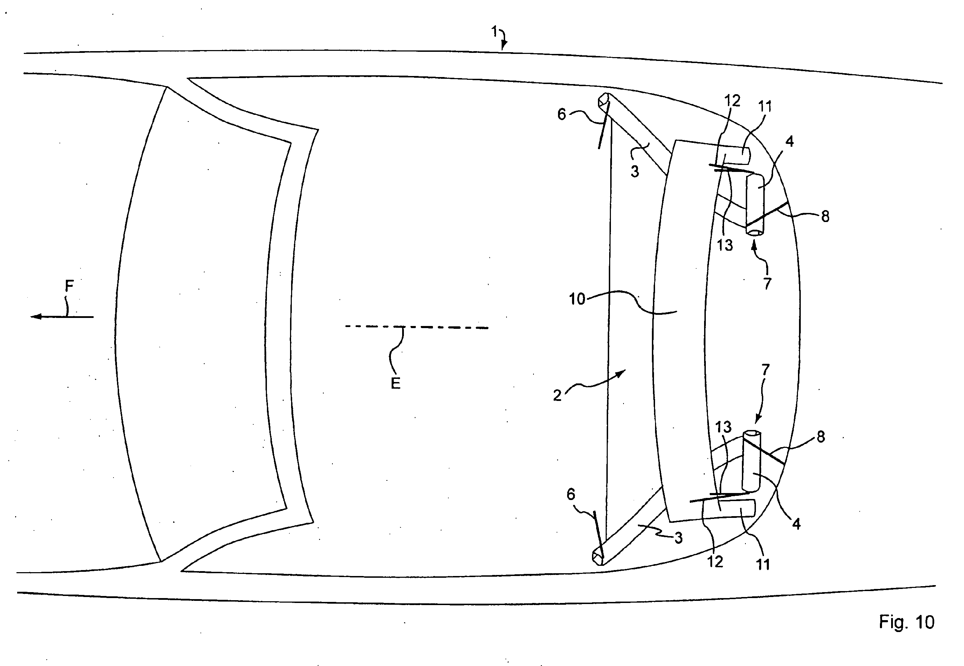

Wie beispielsweise in Fig. 10 sichtbar ist, weisen die weiteren Rahmenteile 4 in abgelegter Stellung des Daches 2 in Draufsicht von ihrer Anbindung 7 an die hinteren Rahmenteile 3 bei deren Einwärtsschwenkwinkel β von nur etwa 30 - 40° zumindest nahezu horizontal nach außen und liegen dabei in einer Horizontalebene mit diesen, also nicht in zwei Ebenen übereinander. Dadurch kann das abgelegte Dach eine nur sehr geringe Höhenerstreckung benötigen.

Die weiteren Rahmenteile 4 können in abgelegter Stellung von ihrer Anbindung 7 an den hinteren Rahmenteilen 3 auch sogar geringfügig heckwärts weisen, also mit einem Winkel γ von über 90° gegenüber ihrer Erstreckung in geschlossener Stellung auswärts schwenken, um auf diese Weise den im Rohbau zur Verfügung stehenden Raum optimal zu nutzen. Das Verschwenken um die Achsen 8 der Gelenke 7 kann dabei zwangsläufig und ohne eigenen Antrieb durch die Anbindung an die hinteren Rahmenteile 3 und die im folgenden noch näher beschriebene Dachspitze 9 erfolgen.

An die weiteren Rahmenteile 4 ist, bei geschlossenem Dach 2 in Fahrtrichtung F mittelbar oder wie hier unmittelbar anschließend, eine Dachspitze 9 mit einem vorderen Querträger 10 gelenkig angebunden, die ebenfalls Ansätze 11 seitlicher Rahmenteile umfaßt und daher auch in Fahrzeuglängsrichtung einen relativ großen Bereich überbrücken kann.

Um die weiteren Rahmenteile 4 gegenüber der selbst nicht um eine Hochachse schwenkenden Dachspitze 9 einwärts verlagern zu können, ist eine Schwenkachse 12 als eigentliche Bewegungsachse vorgesehen. Zusätzlich ist eine Ausgleichsachse 13 vorgesehen, um die nur wenig geschwenkt wird, mit deren Hilfe jedoch ein Verkanten der beidseitig angebundenen Dachspitze 9 verhindert ist. Anstelle der Ausgleichsachse könnte in besonderen Fällen auch eine der Dachspitze 9 immanente Elastizität genutzt werden. Ebenso ist es alternativ möglich, die im wesentlichen in Fahrzeuglängsrichtung weisende Ausgleichsachse 13 dem Gelenk 7 zuzuordnen.

Es ist mit der Erfindung ermöglicht, die Dachspitze 9 während der Dachöffnung in ungewendeter Originalorientierung zu belassen, also den vorderen Querträger 10 derart abzulegen, daß er nicht in gleicher Orientierung wie in geschlossener Stellung liegt, nur nach hinten und abwärts verlagert.

Anders als im genannten Stand der Technik, wo alle Achsen parallel zueinander und zu einer vertikalen Fahrzeuglängsebene stehen, muß hier keine der Achsen 6, 8, 12 oder 13 parallel zu einer weiteren Schwenkachse oder zu einer vertikalen Fahrzeuglängsebene stehen.

Dadurch kann die Dachablage optimiert an die jeweiliegen Platzverhältnisse erfolgen. Je nach Lage der Schwenkachsen 6, 8 und Länge der zugehörigen Rahmenteile 3, 4 können sich unterschiedliche Ablagegeometrien ergeben. Auch ist es möglich, die Dachspitze 9 während der Ablage über Kopf zu wenden.

Der Kofferraum kann nahezu in voller Größe erhalten bleiben, das Dach 2 in einen Raum zwischen diesen und einer Sitzreihe abgelegt werden.

## Patentansprüche

1. Cabriolet-Fahrzeug (1) mit einem Dach (2), das zumindest zwei im geschlossenen Zustand bezüglich der Fahrtrichtung (F) hintereinander folgende seitliche Rahmenteile (4;3) und im Bereich seines Frontendes einen Querträger (10) aufweist, wobei ein hinterer Rahmenteil (3) beweglich an die Karosserie (K) angebunden ist und mit seinem der Anbindung abgewandten Ende bei Öffnen des Daches heckwärts und in Richtung einer vertikalen Fahrzeuglängsmittelebene (E) einwärts verlagerbar und ein an diesen anschließender weiterer Rahmenteil (4) mit seinem hinteren Endbereich mit einwärts bewegbar ist, wobei der hintere Rahmenteil (3) um eine zu einer vertikalen und in Fahrzeuglängsrichtung erstreckten E-bene schräg stehende und diese schneidende Schwenkachse (6) gegenüber der Karosserie (K) beweglich ist,
**dadurch gekennzeichnet,**
**daß** der vordere Querträger (10) gegenüber seiner geschlossenen Stellung ungewendet ablegbar ist.

2. Cabriolet-Fahrzeug (1) nach Anspruch 1,
**dadurch gekennzeichnet,**
**daß** die Schwenkachse (6) sich zumindest mit einer Komponente in Fahrtrichtung (F) nach vorne und in Richtung einer vertikalen Längsmittelebene (E) einwärts erstreckt.

3. Cabriolet-Fahrzeug (1) nach einem der Ansprüche 1 oder 2,
**dadurch gekennzeichnet,**
**daß** ein weiterer Rahmenteil (4) an dem hinteren Rahmenteil (3) über ein Gelenk (7) angebunden ist, dessen Achse (8) schräg zur Schwenkachse (6) der Anbindung des hinteren Rahmenteils (3) an der Karosserie (K) steht.

4. Cabriolet-Fahrzeug (1) nach Anspruch 3,
**dadurch gekennzeichnet,**
**daß** die Achse (8) der Anbindung (7) des weiteren Rahmenteils (4) an dem hinteren Rahmenteil (3) und die Schwenkachse (6) der Anbindung des hinteren Rahmenteils (3) an der Karosserie (K) windschief zueinander stehen.

5. Cabriolet-Fahrzeug (1) nach einem der Ansprüche 1 bis 4,
**dadurch gekennzeichnet,**
**daß** die weiteren Rahmenteile (4) in abgelegter Stellung des Daches (2) in Draufsicht von ihrer Anbindung (7) an die hinteren Rahmenteile (3) zumindest nahezu horizontal nach außen zeigen.

6. Cabriolet-Fahrzeug (1) nach einem der Ansprüche 1 bis 5,
**dadurch gekennzeichnet,**
**daß** die weiteren Rahmenteile (4) in abgelegter Stellung von ihrer Anbindung (7) an die hinteren Rahmenteile (3) eine geringfügig heckwärts weisende Erstreckungskomponente aufweisen.

7. Cabriolet-Fahrzeug (1) nach einem der Ansprüche 1 bis 6,
**dadurch gekennzeichnet,**
**daß** an die weiteren Rahmenteile (4) eine Dachspitze (9) mit einem vorderen Querträger (10) angebunden ist und für diese Anbindung neben einer eigentlichen Bewegungsachse (12) eine zusätzliche Ausgleichsachse (13) vorgesehen ist.

## Claims

1. A convertible vehicle (1) with a roof (2) which comprises at least two lateral frame parts (4;3), arranged in sequence with respect to the direction of travel (F) in the closed condition, and has a cross-member (10) in its front end region, wherein a rear frame part (3) is movably connected to the vehicle body (K) and, when opening the roof, the end of said rear frame part (3) facing away from said connection is movable rearwards and inwards in the direction of a vertical median longitudinal plane (E) and the rear end region of another frame part (4) adjoining the rear frame part (3) can be moved inward at the same time, said rear frame part (3) being movable with respect to the vehicle body (K) about a pivoting axis (6) which is extends obliquely with respect to a vertical plane extending in the longitudinal vehicle direction and which intersects said vertical plane,
**characterised in that**
the front cross-member (10) can be stowed without being reversed with respect to its closed position.

2. The convertible vehicle (1) according to claim 1, **characterised in that** the pivoting axis (6) extends forwards with at least one component in the direction of travel (F) and inwards in the direction of a vertical median longitudinal plane (E).

3. The convertible vehicle (1) according to any one of claims 1 or 2, **characterised in that** a further frame part (4) is connected to the rear frame part (3) via a joint (7) whose axis (8) extends obliquely with respect to the pivoting axis (6) of the connection of the rear frame part (3) to the vehicle body (K).

4. The convertible vehicle (1) according to claim 3, **characterised in that** the axis (8) of the connection (7) of the further frame part (4) to the rear frame part (3) and the pivoting axis (6) of the connection of the rear frame part (3) to the vehicle body (K) are skewed with respect to each other.

5. The convertible vehicle (1) according to any one of claims 1 to 4, **characterised in that** the further frame parts (4), viewed from above, face at least approximately horizontally outwards from their connection (7) to the rear frame parts (3) in the stowed position of the roof (2).

6. The convertible vehicle (1) according to any one of claims 1 to 5, **characterised in that**, in the stowed position, the further frame parts (4) have an extension component facing slightly rearwards from their connection (7) to the rear frame parts (3).

7. The convertible vehicle (1) according to any one of claims 1 to 6, **characterised in that** a roof header (9) comprising a front cross-member (10) is connected to the further frame parts (4) and an additional compensating axis (13) is provided for this connection in addition to an actual axis of motion (12).

## Revendications

1. Véhicule cabriolet (1) avec un toit (2) qui comprend au moins deux parties de cadre latérales (4;3), disposées l'une après l'autre par rapport à la direction de marche (F) en état fermé, et qui présente une traverse (10) dans la région de son extrémité avant, une partie de cadre arrière (3) étant reliée à la carrosserie (K) de manière déplaçable et l'extrémité de la partie de cadre arrière (3) détournée de ladite liaison étant déplaçable, lors de l'ouverture du toit, vers l'arrière et vers l'intérieur dans la direction d'un plan longitudinal médian vertical (E) et la région d'extrémité arrière d'une autre partie de cadre (4), adjacente à la partie de cadre arrière (3), pouvant être déplacée vers l'intérieur en même temps, ladite partie de cadre arrière (3) étant déplaçable par rapport à la carrosserie (K) autour d'un axe de pivotement (6) qui est incliné par rapport à un plan vertical s'étendant dans la direction longitudinale du véhicule et qui coupe ledit plan vertical,
**caractérisé en ce que**
la traverse avant (10) peut être rangée sans inversion par rapport à sa position fermée.

2. Véhicule cabriolet (1) selon la revendication 1, **caractérisé en ce que** l'axe de pivotement (6) s'étend avec au moins une composante vers l'avant dans la direction de marche (F) et s'étend vers l'intérieur dans la direction d'un plan longitudinal médian vertical (E).

3. Véhicule cabriolet (1) selon l'une quelconque des revendications 1 ou 2, **caractérisé en ce qu'**une autre partie de cadre (4) est reliée à la partie de cadre arrière (3) par une articulation (7) dont l'axe (8) s'étend en biais par rapport à l'axe de pivotement (6) de la liaison de la partie de cadre arrière (3) à la carrosserie (K).

4. Véhicule cabriolet (1) selon la revendication 3, **caractérisé en ce que** l'axe (8) de la liaison (7) de l'autre partie de cadre (4) à la partie de cadre arrière (3) et l'axe de pivotement (6) de la liaison de la partie de cadre arrière (3) à la carrosserie (K) sont inclinés l'un par rapport à l'autre.

5. Véhicule cabriolet (1) selon l'une quelconque des revendications 1 à 4, **caractérisé en ce que** les autres parties de cadre (4), en vue de dessus, présentent une orientation au moins approximativement horizontale vers l'extérieur à partir de leur liaison (7) aux parties de cadre arrière (3) dans la position rangée du toit (2).

6. Véhicule cabriolet (1) selon l'une quelconque des revendications 1 à 5, **caractérisé en ce que**, dans la position rangée, les autres parties de cadre (4) présentent une composante d'extension dirigée légèrement vers l'arrière à partir de leur liaison (7) aux parties de cadre arrières (3).

7. Véhicule cabriolet (1) selon l'une quelconque des revendications 1 à 6, **caractérisé en ce qu'**un sommet de toit (9) comprenant une traverse avant (10) est relié aux autres parties de cadre (4) et **en ce que** l'on prévoit un axe compensateur (13) supplémentaire pour cette liaison indépendamment d'un axe de mouvement (12) proprement dit.
